Europäisches Patentamt

European Patent Office

Office européen des brevets

(11) Veröffentlichungsnummer: **0 268 863**

**A1**

(12) **EUROPÄISCHE PATENTANMELDUNG**

(21) Anmeldenummer: **87115926.5**

(22) Anmeldetag: **29.10.87**

(51) Int. Cl.⁴: **G21C 7/12 , G21C 9/02**

(30) Priorität: **11.11.86 DE 3638377**

(43) Veröffentlichungstag der Anmeldung:
**01.06.88 Patentblatt 88/22**

(84) Benannte Vertragsstaaten:
**DE FR GB IT**

(71) Anmelder: **INTERATOM Gesellschaft mit beschränkter Haftung**
**Friedrich-Ebert-Strasse**
**D-5060 Bergisch Gladbach 1(DE)**

(72) Erfinder: **Krüger, Horst, Dipl.-Ing.**
**Strassen 40**
**D-5060 Bergisch-Gladbach 1(DE)**

(74) Vertreter: **Mehl, Ernst, Dipl.-Ing. et al**
**Postfach 22 01 76**
**D-8000 München 22(DE)**

(54) **Kernreaktorregel- und Abschaltvorrichtung mit unterteiltem Hub.**

(57) Die bekannte Regel-und Abschalteinrichtung für Kernreaktoren mit einer auf einer Spindel (61) verfahrbaren Mutter (62), an der ein das Hubgestänge (41) des Absorberstabes haltender Magnet (81) befestigt ist, wird durch Unterteilung des Gesamthubes der Vorrichtung in mehrere Teilhübe a abgewandelt. Hierzu ist die Mutter (62) mit einer durch einen Hubmagneten (63) einziehbaren Klinke (64) versehen, die mit einer Klinkverzahnung (52) einer Schaltstange (51) zusammenwirkt, die um eine Strecke b angehoben werden kann und deren Zähne von der Breite c im Abstand a voneinander angeordnet sind. Bei angehobener Schaltstange (51), d. h. nach einem Erreichen der oberen Begrenzung des jeweiligen Teilhubes kann der Hubmagnet erregt und die Klinke (64) zurückgezogen werden. Die Schaltstange (51) fällt in ihre Ausgangsstellung zurück und der nächsthöhere Teilhub kann durchfahren werden. Bei einer über den Regelbereich hinausgehenden unkontrollierten Ausfahrbewegung der Mutter (62) wird der Magnet (81) stromlos und es erfolgt die Schnellabschaltung durch Einfallen des Absorberstabs. Weitere mechanische und elektrische Sicherungen sorgen dafür, daß auf einmal nur jeweils eine Sperre zwischen Teilhüben überwunden werden kann. Die Abwärtsbewegung der Mutter bei normaler Abschaltung wird nicht behindert.

FIG 2

## Kernreaktorregel-und Abschaltvorrichtung mit unterteiltem Hub

Die vorliegende Erfindung betrifft eine Kernreaktorregel-und Abschaltvorrichtung nach dem Oberbegriff des 1. Anspruchs. Derartige Vorrichtungen sind in der Kerntechnik allgemein gebräuchlich und dienen einerseits dazu, durch mehr oder weniger tiefes Einfahren des Absorberstabes in die Spaltzone des Reaktors dessen Reaktivität in gewünschtem Leistungsbereich zu halten und andererseits dazu, beim Auftreten anders nicht kontrollierbarer Betriebszustände von dem Antriebsmechanismus gelöst zu werden, so daß er unter der inhärent sicheren Wirkung der Schwerkraft ganz in die Spaltzone fällt und hier die Kettenreaktion unterbricht. Für das Verfahren im Regelbereich werden Spindelantriebe bevorzugt. Ebenfalls zum Stand der Technik gehören Elektromagnete, die während des Normalbetriebes des Reaktors erregt werden und so einen Anker festhalten, der über ein Hubgestänge mit dem eigentlichen Absorberstab in Verbindung steht. Es wird zunächst davon ausgegangen, daß ernsthafte Störungen im Reaktorbetrieb, auch wenn eine Betätigung durch das Bedienungspersonal unterbleibt, zu einer Unterbrechung der Stromzufuhr führen, wodurch sich der Anker von Elektromagneten lösen und den Abwurf des Absorberstabes einleiten kann. In Sicherheitsstudien ist unterstellt worden, daß die Abschaltung des Regelantriebes während eines Hubvorganges der Absorberstäbe versagen könnte, so daß diese zu weit aus der Spaltzone herausgefahren werden. Es werden daher Sicherheitsschaltungen vorgesehen, die in einem solchen Falle die Stromzufuhr zu dem den Absorberstab haltenden Elektromagneten unterbrechen, so daß eine Schnellabschaltung des Reaktors stattfindet. Bei der weiterhin unterstellten Versagensmöglichkeit auch dieser Sicherheitsschaltung tritt unvermeidlicherweise eine Leistungsexkursion des Reaktors mit teilweiser oder vollständiger Zerstörung des Kerns ein. Durch folgende Ergänzungsmaßnahmen (insbesondere Containment) werden die Schäden in der Umgebung auf ein unbedenkliches Maß begrenzt. Zur Vermeidung dieses Schadensablaufes hat die Anmelderin in der EP-B-0 123 204 eine Ausgestaltung der bekannten Vorrichtungen in der Art vorgeschlagen, daß eine inhärent sichere Auslösung der Schnellabschaltung auch dann gewährleistet ist, wenn bei einer außer Kontrolle geratenden Hubbewegung des Absorberstabes ein Abschalten des Elektromagneten nicht gelingt. Dies wird dadurch erreicht, daß das Hubgestänge beim Erreichen der obersten zulässigen Stellung gegen eine mechanische Begrenzung in Form eines Nockens läuft, wodurch der Anker des Gestänges zwangsweise vom Elektromagneten abgehoben wird, so daß der Absorberstab in die Spaltzone fallen kann. In besonderer Ausgestaltung der Erfindung wird außerdem vorgeschlagen, nicht das Hubgestänge selbst, sondern ein mit ihm über eine Kupplung verbundenes Schaltgestänge gegen den Begrenzungsnocken laufen zu lassen, wodurch die den Absorberstab haltende Kupplung zwangsweise geöffnet wird. Dem sich im Laufe der Betriebszeit steigernden Abbrand in der Spaltzone und dem entsprechend immer weiter nach oben wandernden Regelbereich wird dadurch entsprochen, daß der Begrenzungsnocken im gleichen Maße allmählich nach oben verschoben wird. Gegen diese Vorrichtung ist der Einwand vorgebracht worden, es ließe sich nicht ausschließen, daß der Begrenzungsnocken durch das Bedienungspersonal fahrlässig über die eigentlich zulässige Höchststellung hinaus nach oben verfahren werden könnte, so daß bei einer unkontrollierten Hubbewegung der zwangsweise Abwurf des Absorberstabes zu spät erfolgen würde.

Aufgabe der vorliegenden Erfindung ist eine Vorrichtung der beschriebenen Art, bei der eine unbeabsichtigte Freigabe des gesamten Hubbereichs unmöglich ist. Ohne eine Vergrößerung und ohne eine Abkehr von den bislang bewährten Konstruktionsprinzipien soll eine vollständige Sicherheit gegen ein unkontrolliertes Ausfahren des Absorberstabes erreicht werden, indem dessen überhaupt möglicher Bewegungsbereich auf denjenigen begrenzt wird, der dem jeweiligen Regelbereich entspricht; zugleich soll weiterhin sichergestellt sein, daß bei einer unkontrollierten Ausfahrbewegung eine Schnellabschaltung erfolgt.

Die Lösung dieser Aufgabe erfolgt durch die im kennzeichnenden Teil des 1. Anspruchs angegebenen Mittel. Die Vorrichtung stellt sicher, daß der Absorberstab nur in einem Regelbereich bewegt werden kann, der bei dem jeweiligen Abbrand der Spaltzonen sicher ist. Muß infolge fortschreitenden Abbrandes der Regelbereich weiter nach oben verlegt werden, kann dies nur durch die bewußte Aufhebung einer Sperre geschehen; dabei ist sichergestellt, daß nur jeweils eine Sperre auf einmal aufgehoben werden kann. Die nächsthöhere Sperre kann erst dann aufgehoben werden, wenn der neu eröffnete Regelbereich bis an sein oberes Ende durchfahren worden ist.

Durch den 2. Anspruch ist eine praktische Ausgestaltung des im 1. Anspruch angegebenen allgemeinen Erfindungsgedankens definiert. Auf ihre Wirkungsweise und Vorteile wird weiter unten im Rahmen der Zeichnungsbeschreibung eingegangen. Im 3. bis 5. Anspruch sind zusätzliche Schaltungsmerkmale angegeben, durch die die Vorrichtung nach dem 2. Anspruch vervollkommnet wird.

Die Ausgestaltung nach dem 6. Anspruch gewährleistet eine erhöhte Sicherheit gegen denkbare Fehlfunktionen der Vorrichtung.

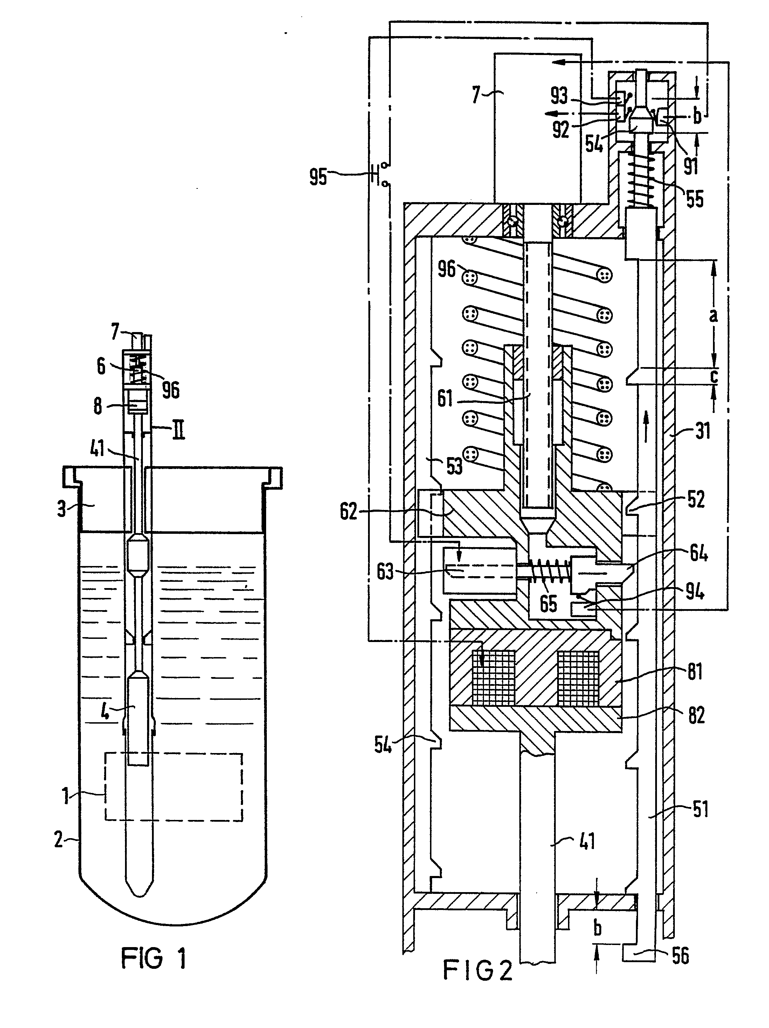

Ein Ausführungsbeispiel der Erfindung ist in der Zeichnung dargestellt, und zwar zeigt Figur 1 - schematisch und ohne Anspruch auf genaue Proportionen die für das Verständnis der vorliegenden Erfindung wesentlichen Teile eines Kernreaktors und Figur 2 in vergrößertem Maßstab die Einzelheit II der Figur 1.

Eine Spaltzone 1 ist im Inneren eines mit einem flüssigen Kühlmittel gefüllten Kernreaktorbehälters 2 angeordnet, der mit einem Deckel 3 verschlossen ist. Im Deckel 3 sind mehrere Regel- und Abschaltvorrichtungen angeordnet, von denen hier nur eine, der Deutlichkeit halber übertrieben groß dargestellt ist. Sie besteht im wesentlichen aus einem neutronenabsorbierendes Material enthaltenden eigentlichen Absorberstab 4, der über ein Gestänge 41 an einer elektromagnetischen Haltevorrichtung 8 aufgehängt ist. Durch einen Spindeltrieb 6, der durch einen in der einen wie der anderen Drehrichtung laufenden Motor 7 in Bewegung gesetzt werden kann, wird der Absorberstab 4 entsprechend den jeweiligen Betriebsbedingungen mehr oder weniger tief in die Spaltzone 1 eingefahren. Um diese im Notfall schnell ganz abschalten zu können, kann die elektromagnetische Haltevorrichtung 8 geöffnet werden, worauf der Absorberstab 4 in die Spaltzone 1 hineinfällt. Die Haltevorrichtung 8 besteht aus einem Elektromagneten 81, der an einer Mutter 62 befestigt ist, die durch die Drehung einer Spindel 61 der Höhe nach in einem am Reaktordeckel 3 befestigten Gehäuse 31 verfahren werden kann, und aus einem am Hubgestänge 41 angeformten Magnetanker 82, der bei erregtem Magnet 81 an diesem festgehalten wird. Durch Führung auf einer weiter unten näher beschriebenen Begrenzungsstange 53 wird die Mutter 62 unverdrehbar gehalten. Im Gehäuse 31 ist ferner eine Schaltstange 51 angeordnet, die mit einer in Aufwärtsrichtung sperrenden Klinkverzahnung 52 versehen ist, wobei die einzelnen Zähne die Breite c aufweisen und voneinander um den Abstand a entfernt sind. Die Schaltstange 51 kann entgegen der Kraft einer ersten Feder 55 um die Strecke b angehoben werden, wodurch nacheinander ein erster Schalter 91 ein-und sowie ein zweiter bzw. dritter Schalter 92, 93 ausgeschaltet werden. In der Mutter 62 sind quer zur Spindelrichtung ein Hubmagnet 63 und eine Klinke 64 angeordnet. Letztere ragt in ihrer gezeichneten Normalstellung über die Kontur der Mutter 62 hinaus, und läuft bei einer Aufwärtsbewegung derselben schließlich gegen den nächsthöheren Zahn 52 der Schaltstange 51 und hebt diese so weit an, daß der erste Schalter 91 betätigt wird, der in dem den Hubmagneten 63 versorgenden Stromkreis (wie andere Stromkreise nur schematisch in strichpunktierten Linien angedeutet) angeordnet ist. Geschlossen werden kann dieser Stromkreis schließlich durch das vom Betriebspersonal in der Warte absichtlich vorzunehmende Betätigen eines fünften, im Normalzustande offenen Schalters 95; ein Erregen des Hubmagneten 63 und damit ein Zurückziehen der Klinke 64 ist nur bewußt durch Betätigen dieses Schalters möglich. Andererseits ist durch den ersten Schalter 91 sichergestellt, daß auch bei Betätigung des fünften Schalters 95 nur dann ein Zurückziehen der Klinke 64 und ein Überfahren des nächsthöheren Zahnes 52 möglich ist, wenn die Klinke 64 gegen letzteren gefahren ist. Dadurch wird der Hubmagnet 63 erregt und zieht die Klinke 64 entgegen der Kraft einer zweiten Feder 65 in die Kontur der Mutter 62 zurück, bis der Zahn 52 freigegeben wird. Durch die erste Feder 53 wird die Schaltstange 51 dann in ihre gezeichnete Normalstellung zurückgedrückt; der erste Schalter 91 schaltet wieder aus und der Hubmagnet 63 wird entregt. Unterstützt durch die zweite Feder 65 kehrt auch die Klinke 64 in ihre Ausgangsstellung zurück. Sollte die Klinke klemmen, so würde sie mit ihrem anderen (in der Zeichnung linken) Ende über die Kontur der Mutter 62 hinwegragen und in die Klinkverzahnung 54 der Begrenzungsstange 53 hineinragen, die am Gehäuse 31 befestigt ist, so daß eine weitere Aufwärtsbewegung der Mutter 62 unmöglich wird. Die Klinkverzahnungen 52 und 54 sind der Höhe nach gegeneinander um das Maß c versetzt. Bei eingezogener Klinke 64 wird ein vierter Schalter 94 ausgeschaltet, durch den die Stromzufuhr zum Antrieb 7 unterbrochen wird. Der Antrieb 7 kann erst wieder in Gang gesetzt werden, wenn die Klinke 64 in ihre Normalstellung zurückgekehrt und der vierte Schalter 94 wieder eingeschaltet ist. Bevor der nächsthöhere Zahn 52 überfahren werden kann, muß die Mutter 62 den nächsthöheren Regelbereich a durchfahren haben. Durch das Ausschalten des zweiten Schalters 92 durch die gegen ihn laufende, angehobene Schaltstange 51 wird die Stromzufuhr zum Antrieb 7 unterbrochen. Versagt dieser Schalter, d. h. tritt ein unkontrolliertes Ausfahren des Absorberstabes 4 ein, wird die Schaltstange 51 schließlich um ihr Maximalmaß b angehoben und betätigt den dritten Schalter 93, durch den die Stromzufuhr zum Magneten 81 unterbrochen wird; der Magnetanker 82 fällt von diesem ab und der Absorberstab 4 (gegebenenfalls in bekannter Weise durch hier nicht gezeigte zusätzliche Federn unterstützt) in die Spaltzone 1 zurück, so den Reaktor abschaltend. Auch bei einem Versagen des dritten Schalters 93 ist die mögliche Aufwärtsbewegung der Schaltstange 51 und damit des Absorberstabes 4 begrenzt, indem ein an ersterer angebrachter zusätzlicher Nocken 56 gegen das Gehäuse 31 läuft. Selbstverständlich sind auch noch die weiteren, üblichen und hier nicht gezeigten Sicherheitsschaltungen vorhanden, durch die im Bedarfsfall der Magnet 81 stromlos gemacht wird. In Abwärtsbewegung sperren die Klinkverzahnungen 52, 54 nicht (die Klinke 64 wird selbsttätig in die Kontur der Mutter 62 zurückgedrückt, indem sie mit ihrer Schräge an der Schräge der Zähne 51, 53 abgleitet), so daß ein Einfahren des Absorberstabes 4 in die Spaltzone mittels des Spindeltriebes 6 auch aus der obersten Stellung der Mutter 62 ohne Unterbrechung möglich ist (normale Abschaltung). Die Abstände a zwischen den einzelnen Zähnen 52, 54 müssen nicht, wie hier gezeigt, gleichmäßig sein; durch unterschiedliche Abstände können bei Bedarf die durch sie jeweilig begrenzten Regelbereiche so bestimmt werden, daß bei der untersten Lage in einem bestimmten Regelbereich der Reaktor mit der geringstmöglichen Dauerleistung betrieben wird, in der obersten, um das Maß a + b davon entfernten Lage jedoch keine unzulässig hohe Leistungsfreisetzung erfolgt. Als elektrische Zuleitung für die in der Mutter 62 untergebrachten Magnete und Schalter dient in bekannter Weise eine Kabelfeder 96.

## Ansprüche

1. Kernreaktorregel-und Abschaltvorrichtung mit mindestens einem neutronenabsorbierendes Material enthaltenden Absorberstab (4), der zwischen einer unteren Lage und einer mittleren, sowie zwischen dieser und einer oberen Lage verfahrbar ist, wobei der Reaktor abgeschaltet ist, wenn der Absorberstab in seiner unteren Lage ist, der Reaktor sich bei frischer Spaltzone (1) auf seinem geringsten, im bestimmungsgemäßen Betrieb zu erreichenden Leistungsniveau befindet, wenn der Absorberstab in seiner mittleren Lage ist, und der Reaktor sich bei abgebrannter Spaltzone auf seinem höchsten, im bestimmungsgemäßen Betrieb zu erreichenden Leistungsniveau befindet, wenn der Absorberstab in seiner oberen Lage ist, **dadurch gekennzeichnet, daß**

a) der Hub des Absorberstabes (4) zwischen seiner mittleren und seiner oberen Lage in Teilhübe a aufgeteilt ist, wobei der Übergang von einem Teilhub in den nächsthöheren nur nach Aufhebung je einer Sperre (52, 64) möglich und jede Sperre nur in einem getrennten Arbeitsgang aufhebbar ist und

b) jeder Teilhub a so begrenzt ist, daß bei dem jeweils gegebenen Abbrandzustand der Spaltzone 1 auch bei Erreichen der oberen Begrenzung desselben keine unzulässig hohe Leistungsfreisetzung in der Spaltzone möglich ist.

2. Vorrichtung nach Anspruch 1 mit einem Absorberstab (4), der über ein Hubgestänge (41) mit dem Anker (82) eines Elektromagneten (81) verbunden ist, der in einer Mutter (62) angeordnet ist, die gegenüber einem am Reaktorbehälter (3) befestigten Gehäuse (31) unverdrehbar auf einer mittels eines Antriebes (7) wahlweise im einen oder anderen Drehsinn antreibbaren Spindel (61) angebracht ist,

**gekennzeichnet durch** folgende Merkmale:

a) eine mit einer in Aufwärtsrichtung sperrenden Klinkverzahnung (52) versehene Schaltstange (51), die entgegen der Kraft einer ersten Feder (55) um ein Maß b aus einer unteren in eine obere Endlage bringbar ist.

b) einen durch die Schaltstange (51) kurz vor ihrer oberen Endlage einschaltbaren ersten Schalter (91).

c) eine in der Mutter (62) in Querrichtung verschiebbare, an ihrem einen Ende über die Kontur derselben hinausragende und in die Klinkverzahnung (52) eingreifende Klinke (64).

d) einen mittels des ersten Schalters (91) und eines fünften Schalters (95) einschaltbaren Hubmagneten (63), durch den die Klinke (64) mit ihrem einen Ende entgegen der Kraft einer zweiten Feder 65 in die Kontur der Mutter 62 einziehbar ist.

e) daß der Abstand der einzelnen Zähne der Klinkverzahnung (52) zueinander a ist.

3. Vorrichtung nach Anspruch 2, **gekennzeichnet durch** einen zweiten, durch die Schaltstange (51) kurz unter ihrer oberen Endlage ausschaltbaren Schalter (92), mit dem die Stromzufuhr des Antriebs (7) unterbrechbar ist.

4. Vorrichtung nach Anspruch 3, **gekennzeichnet durch** einen vierten, durch die Klinke (64) in ihrem eingezogenen Zustand ausschaltbaren Schalter (94), mit dem die Stromzufuhr des Antriebs (7) unterbrechbar ist.

5. Vorrichtung nach Anspruch 2, **gekennzeichnet durch** einen dritten, durch die Schaltstange (51) in ihrer oberen Endlage ausschaltbaren Schalter (93), mit dem die Stromzufuhr des Magneten (81) unterbrechbar ist.

6. Vorrichtung nach Anspruch 2, **gekennzeichnet durch** einen weiteren, an der Schaltstange (51) angebrachten Nocken (56), der deren möglichen Bereich der Aufwärtsbewegung begrenzt.

7. Vorrichtung nach Anspruch 2, **dadurch gekennzeichnet, daß**

a) die Klinke (64) bei eingezogenem einen Ende mit ihrem anderen Ende über die Kontur der Mutter (62) hinausragt und in die Klinkverzahnung (54) einer Begrenzungsstange (53) eingreift, die am Gehäuse (31) befestigt ist und

b) die Klinkverzahnung (54) der Begrenzungsstange (53) gegenüber derjenigen (52) der in ihrer unteren Endlage befindlichen Schaltstange (51) der Höhe nach um das Maß c der Zahnbreite versetzt ist.

86 P 6727

FIG 1

FIG 2

Europäisches Patentamt

EUROPÄISCHER RECHERCHENBERICHT

Nummer der Anmeldung

EP  87 11 5926

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | EP-A-0 123 204  (INTERATOM)<br>* Seiten 4-6; Ansprüche; Figuren *<br>--- | 1-7 | G 21 C   7/12<br>G 21 C   9/02 |
| A | DE-A-2 741 227  (KAPRALOV et al.)<br>* Seite 7, Absatz 2 - Seite 8, Absatz 3; Seite 16, letzter Absatz; Figuren 2-6 *<br>--- | 1-7 | |
| A | FR-A-2 507 809  (C.E.A.)<br>* Seite 2, erster Absatz; Ansprüche; Figur 1 *<br>--- | 1-7 | |
| A | DE-B-1 281 596  (GESELLSCHAFT FÜR KERNFORSCHUNG)<br>* Spalte 1, erster Absatz; Ansprüche; Figur *<br>----- | 1-7 | |

RECHERCHIERTE SACHGEBIETE (Int. Cl.4)

G 21 C   7/00
G 21 C   9/00

Der vorliegende Recherchenbericht wurde für alle Patentansprüche erstellt

| Recherchenort | Abschlußdatum der Recherche | Prüfer |
|---|---|---|
| DEN HAAG | 10-02-1988 | LAMINGER N.W. |